# EUROPEAN PATENT SPECIFICATION

(11) **EP 4 064 587 B1**
(45) Date of publication and mention of the grant of the patent: **16.07.2025**
(21) Application number: 20889326.3
(22) Date of filing: 19.11.2020
(51) Int. Cl.: H04B 10/071, H04B 10/272

(54) **OPTICAL DEVICE, METHOD AND SYSTEM FOR REMOTELY DETECTING OPTICAL NETWORK TERMINALS**
OPTISCHE VORRICHTUNG, VERFAHREN UND SYSTEM ZUM FERNDETEKTIEREN VON OPTISCHEN NETZWERKENDGERÄTEN
DISPOSITIF OPTIQUE, MÉTHODE ET SYSTÈME POUR LA DÉTECTION HORS SITE DE TERMINAUX DE RÉSEAU OPTIQUE

(30) Priority: 20.11.2019 ES 201931016
(43) Date of publication of application: 28.09.2022
(73) Proprietor: Telefonica, S.A., 28013 Madrid (ES)
(72) Inventor: PRIETO ANTON, Sergio, 28013 MADRID (ES); TOCA GARCÍA, Manuel, 28013 MADRID (ES)
(74) Representative: Herrero & Asociados, S.L.
(86) International application number: PCT/ES2020/070720
(87) International publication number: WO 2021/099666

(56) References cited:
- CN-A- 103 297 125
- JP-A- 2002 022 600
- US-A1- 2008 002 718
- US-A1- 2010 221 011
- US-A1- 2013 188 947
- US-A1- 2019 280 768
- US-A1- 2019 280 768

## Description

### Object of the invention

The present invention is applied to the technical sector of fiber optic telecommunications and, in particular, shows a technical solution for the detection of optical network terminals, also called ONTs.

### Background of the invention

Fiber optic data distribution networks are increasingly used to provide broadband data connections to users. This is how passive optical networks (PON) have appeared, which allow the distribution of data through optical fiber. The fiber network is named differently depending on where the PON network ends, so we would have for example: fiber to the building (FTTB) or fiber to the home (FTTH). The latter allow communication via fiber optics with optical network terminals (ONTs) or optical network units (ONUs) located at the user's premises (or generally speaking in the place where the user has his/her optical network connection equipment) or near it.

In fiber optic access networks to the home (FTTH), the telecommunications operator systems that provide fiber optic service deploy their own fiber network and take it to the optical terminal boxes (OTBs) installed on the facades or inside the buildings, which house the elements necessary to divide the existing resources among the connected customers (users).

It is common for FTTH fiber optic deployments to be carried out in phases or sections. In a first phase, the deployment is carried out from the operator's headend station (where the OLT optical line terminal is located, which controls the distribution of the operator's signals through optical fiber) to the optical terminal box (OTB). In this first phase, those real estate units from which FTTH service could be provided from said OTB are considered under coverage or "home passed". In environments where there are several operators with their own networks deployed in parallel, this phase is designed with a certain percentage of penetration, anticipating that customers will be distributed among the different operators.

In a second phase, at the time of registration of a real estate unit, the laying of the last section of optical fiber (optical fiber drop line) is carried out from the OTB to the interior of the customer's premises, ending at an optical network termination point (ONTP) and from there to the optical network terminal ONT. The ONTP (rosette) can be considered to be the termination point of the passive part of the FTTH optical network that is installed at the customer's premises (normally it is present at a premises if there has ever been a fiber registration at the premises, whether or not there is a customer with a service currently contracted). By means of a fiber optic cord (normally with SC/APC connectors) the ONTP is connected to the ONT optical terminal, which is the active user equipment that communicates with the headend (OLT) to provide the contracted service to the customer. This last section of the network, which goes from the optical terminal box (OTB) to the optical rosette (ONTP), installed inside the customer's premises, is likely to be shared by different operators.

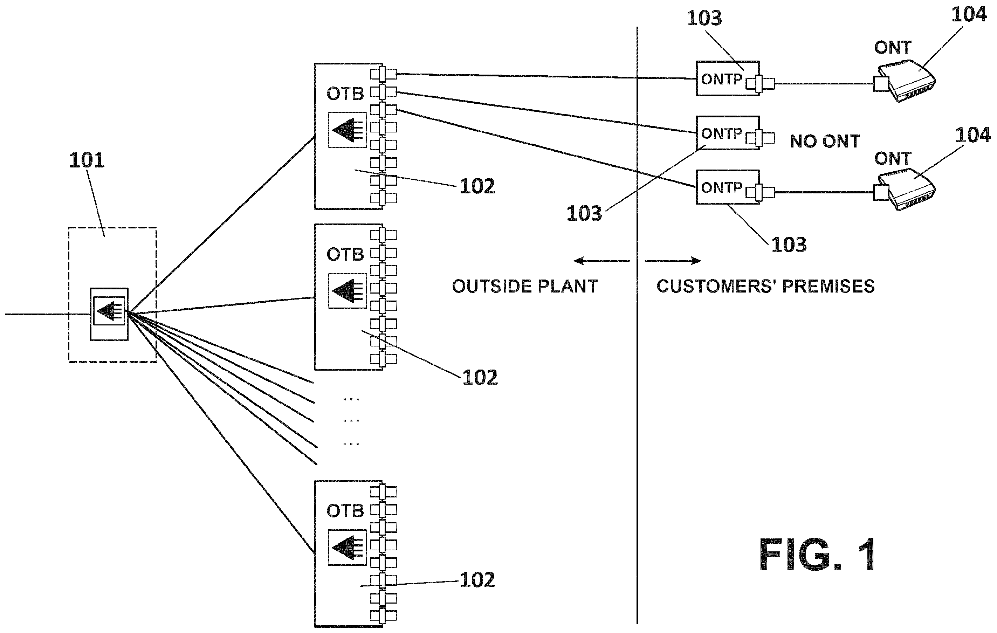

Figure 1 shows an example architecture of an FTTH optical network deployment where there is a first level optical splitter (101) at which the optical signal arrives from the OLT located at the headend station and distributes the optical signal to the different optical terminal boxes (OTBs, 102), which would incorporate the second level splitters. The deployment corresponding to the first phase reaches up to this point. In the second phase, the fiber is deployed between the OTBs and the optical rosettes (ONTPs, 103) and from there to the ONTs (104) of the end user that will deliver the signal (already converted to an electrical signal) to the user equipment for its consumption. As seen in the figure, each OTB has several ports (8 in figure 1 although this is just an example and can have any other number of ports) which allows it to connect to several user terminals having a fiber optic connection (fiber optic drop line) between each port of the OTB and each user terminal (the maximum number of terminals to which it can be connected will be equal to the number of ports that the OTB has).

Due to the aforementioned features of FTTH network deployments, it is possible that in some cases the fiber optic drop lines are not disconnected from the OTB when the customer cancels the service or changes operator and, therefore, it is possible to produce a mismatch between what is physically installed and what is registered in the operator's systems (between the installed optical drop lines and the really active users of that operator). That is, there may be one or more fiber optic drop lines occupying ports in the OTB box without these drop lines actually being connected to user terminals or ONTs, that is, without actually serving any user (customer) of the operator. For example, in a real situation, you can have an optical terminal box (OTB) with all its ports occupied by fiber optic drop lines, although in fact, in some cases, there is no longer a customer connected, for example, because the operator has changed and the new operator has decided to lay a new drop line without disconnecting the drop line previously installed by the first operator.

These circumstances force operators to check repeatedly, in-situ and physically, if the inventory registered in their systems corresponds to what is actually installed in the network. These checks can be done more or less quickly and reliably, checking the identification and labeling of the customer drop lines, and if they are not labeled (because the labels have disappeared), disconnecting the drop lines of each customer and checking if the corresponding ONT remains active or not. This can be done as long as all the ONTs with active service are synchronized at the time of checking, and it could make it possible to identify which fiber optic drop lines are not connected to an active customer and which are connected.

However, it often happens that, for example, during periods of absence at the premises, the customer disconnects the ONT from the power supply and it loses synchronism with the operator headend (with the OLT). In these cases, it is impossible, with current methods, to identify fiber optic drop lines not having an active customer.

For this reason, there is a need to have an optical ONT remote detection device that solves this problem by being able to detect, from the operator's optical terminal box, which fiber optic drop lines (connections) actually end up in an optical rosette at the customer's premises that has an ONT optically and physically connected, whether or not it is turned on and synchronized.

In the state of the art there are proposals to detect and identify ONTs, but not to detect active ONTs such as the present invention. Thus, some state-of-the-art patents show solutions to solve problems related to problematic ONTs, which for one reason or another transmit at instants of time that do not correspond to them, interfering with the optical signals of other ONTs and causing the system to malfunction (such as patent US7468958 B2 or patent applications US2007/0242954 A1 or US2008/0138064). In other cases, the aim is to introduce additional equipment in the OLT ports that provides the function of detecting reflections in the fiber optic network to detect possible failures or breaks in the network and determine the distance at which the problem has occurred (such as for example US2005/0201761). Patent application US2019/280768 A1 discloses a way of determining whether an ONT is plugged into a network or not.

However, in all the above cases, the problem that is intended to be solved is not that of detecting active ONTs, whether or not they are electrically powered, and the element in which the detection device is intended to be added is in the transmission equipment placed in the station, the OLT. In the embodiments proposed in this text, on the contrary, the equipment to be used would be independent of the transmission system and the test point in which it could be used would be different, specifically in the last section of the FTTH network from the OTB to the customer's premises, where the ONT should be connected. In addition, unlike the above-mentioned state of the art, the objective is to detect from the optical terminal box if there is an ONT, connected or not, at the opposite end of a drop line optical cable, regardless of whether the ONT is on or off at that moment.

### Description of the invention

The present invention is useful for solving the problems mentioned above, by means of a device of claim 8 and method of claim 1 for remote detection of customer/user optical terminal equipment (for example ONTs, ONUs) that allows detecting from the optical terminal box (OTB) and remotely if there is a customer's terminal equipment physically connected (at the customer's premises) whether or not the terminal equipment is turned on.

In other words, the proposed solution makes it possible, remotely and independently of the transmission system used, to detect and identify from the operator's optical terminal box, which fiber optic drop lines (connections) actually end up in an optical rosette at the customer's premises that has an ONT optically connected, whether or not it is electrically powered, and which ones are not. This allows the operator to really know which drop lines are associated with active customers and which are not, being able to disconnect the unused drop lines (releasing corresponding ports), thus efficiently using the resources of the distribution network and, specifically, the resources of the optical terminal boxes OTBs.

Specifically, in a first aspect shows a method for detecting the presence of a user's optical network terminal equipment (normally located at the user's premises) optically connected to a fiber optic drop line of a fiber optic distribution network, wherein the method comprises the following steps:
a) Transmitting by an optical device connected to the fiber optic drop line, a first optical signal having a given wavelength with a first polarization, through the fiber optic drop line;
b) Measuring by the optical device, the optical power of the reflected first optical signal received through the fiber optic drop line (that is, of the optical signal received through the fiber drop line as a result of the reflection of the first optical signal);
c) Transmitting by the optical device, through the fiber optic drop line, a second optical signal having the given wavelength with a second polarization different from the first polarization;
d) Measuring by the optical device, the optical power of the reflected second optical signal received through the fiber optic drop line (that is, of the optical signal received through the fiber drop line as a result of the reflection of the second optical signal);
e) Comparing the difference between the optical power measured in step b) and step d) with a threshold value and determining the presence of the user optical network terminal equipment based on the result of said comparison.

Step e) may comprise: if said difference is greater than the threshold value, determining that there is a user optical network terminal piece of equipment optically connected to the fiber optic drop line and otherwise, determining that there is no user optical network terminal equipment optically connected to the fiber optic drop line.

In one embodiment, it comprises a step prior to a), which consists of:
- disconnecting the fiber optic drop line from an optical terminal box, OTB, and connecting the fiber optic drop line to the device.

Step e) can be performed in a processor of the device and the result of the determination is communicated by means of a message via a communication network and/or is displayed by a user interface of the device.

The optical powers measured in steps b) and d) can be communicated by means of a message through a communication network and/or shown by means of a user interface of the device.

In one embodiment, the first polarization is the polarization at which the measured power of the reflected signal is maximum and the second polarization is the polarization at which the received signal of the reflected signal is minimum. For example, prior to step a) an optical signal having a certain initial polarization is transmitted and, starting from that initial polarization, the polarization of the transmitted signal is modified until reaching the polarization at which the reflected signal has a maximum power, first polarization, (step a)) and the polarization of the transmitted signal is modified until reaching the polarization at which the reflected signal has a minimum power, second polarization (step c)).

The fiber optic distribution network can be a passive optical network, PON.

The optical network termination equipment may be an ONT.

In one embodiment, the wavelength of the optical signal emitted in steps a) and c) is close to the one emitted by the transceiver of an ONT in a passive optical network, for example, 1310 nm.

In one embodiment, the device is connected to a switch connected in turn to a group of several fiber optic drop lines, and wherein the switch consecutively connects the device with each of the fiber optic drop lines of the group and the steps a)-e) are performed for each of the group's fiber optic drop lines.

A second aspect shows devices for carrying out any of the methods described above. Specifically, a detector device for user optical network terminal equipment of a fiber optic distribution network is shown, wherein the device comprises:
- An optical source emitting an optical signal at a given wavelength;
- An optical signal polarization controller;
- An optical circulator comprising three optical ports and configured to transmit all the optical signal received by the first port (P1) to the second port (P2) of the circulator and to transmit all the optical signal received by the second port (P2) to the third port (P3); or an optical coupler configured to transmit a first percentage of the power of a signal received by a first input/output port to a common port and to transmit a second percentage of the signal received by the common port to a third input/output port.
- An optical meter connected to the third port of the circulator or optical coupler.

The output of the device is connected to a fiber optic drop line. Furthermore, the device comprises a processor configured to cause the following actions to be performed:
- Establishing a first polarization by the polarization controller and transmitting a first optical signal at a given wavelength, emitted by the optical source, with the first polarization through the optical fiber drop line;
- Measuring in the optical meter the optical power of the first reflected optical signal, received through the fiber optic drop line and the optical coupler or circulator;
- Establishing a second polarization by the polarization controller and transmitting a second optical signal at the given wavelength, emitted by the optical source, with the second polarization through the optical fiber drop line;
- Measuring in the optical meter the optical power of the second reflected optical signal, received through the fiber optic drop line and the optical coupler or circulator.

A third aspect shows a system for detecting the presence of a user optical network terminal equipment, optically connected to a fiber optic drop line of a fiber optic distribution network, wherein the system comprises a device as described above, at least one fiber optic drop line and at least one optical terminal box, OTB.

Finally, in another aspect of the invention, a computer program is shown that comprises computer-executable instructions to implement the described method, when executed in a computer (or a digital signal processor, an application-specific integrated circuit, a microprocessor, a microcontroller, or any other form of programmable hardware). Said instructions may be stored on a digital data storage medium.

The scope of the present invention is defined by the appended independent and dependent claims. For a more complete understanding of the invention, its objects and advantages, reference may be made to the following specification and accompanying drawings.

### Brief description of the figures

A series of drawings that help to better understand the invention and that are expressly related to an embodiment of said invention that is presented as a non-limiting example of it are briefly described below.
FIGURE 1.- Shows a schematic block diagram of an FTTH fiber optic access network deployment.
FIGURE 2.- Shows a schematic block diagram of the last phase of an FTTH fiber optic access network deployment in which the ONT detection device is used, according to an embodiment of the invention.
FIGURE 3.- Shows a view of a transceiver used in an ONT or ONU of a passive fiber optic network (PON).
FIGURES 4a and 4b.- Show two schematic block diagrams of an ONT detector device, in the initial state and after modifying the polarization, according to an embodiment of the invention.
FIGURE 5.- Shows a schematic block diagram of an ONT detector device according to an embodiment of the invention.
FIGURE 6.- Shows a schematic block diagram of an ONT detector device according to an embodiment of the invention.

### Detailed description of the invention

Examples of embodiments of the invention are described below in detail, making reference when necessary to the figures cited above, without limiting or reducing the scope of protection of the present invention.

In the embodiments described below, devices and methods will be shown for the remote detection of fiber optic termination user terminal equipment (for example, ONTs, ONUs) that make it possible to detect in the last section of the network (specifically from the box optical terminal OTB) if there is a physically connected user terminal equipment (at the customer's premises), being it turned on or not. This text will normally refer to the detection of ONTs in FTTH networks, but the solution proposed in the present invention can be used for any type of fiber optic termination user terminal (ONT, ONU or any other type) and for any type of fiber optic signal distribution network.

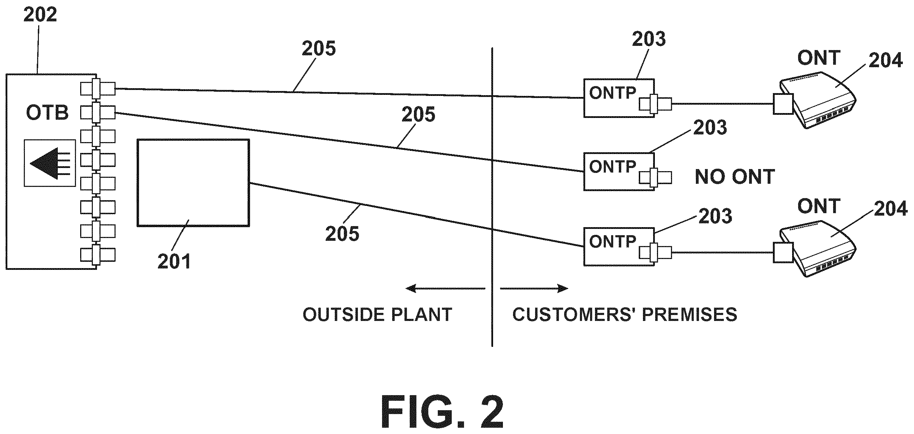

Figure 2 shows an example of the architecture of the last section of an FTTH optical network in which the ONT detection device can be used, according to an embodiment of the invention. As seen in the figure, the ONT remote detection optical device (equipment) (201) would be connected to the different optical drop lines (205), preferably at the point where the drop lines connect to the OTBs (202). For this purpose, it is necessary to disconnect the drop lines to be tested from the different ports of the OTB, and to connect them to the ONT remote detection device. In figure 2, only one detector device is shown, but of course several devices (201) can be used simultaneously, each one to test a drop line to make the detection faster or, as it will be see later, even a multiport device that allows testing more than one drop line.

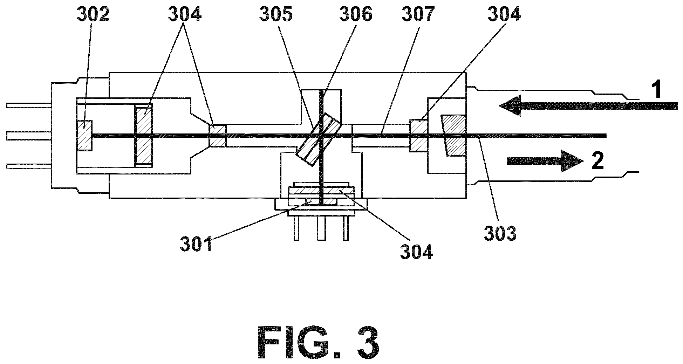

From that point (outside plant), the device will detect whether an optical network terminal equipment is connected to the opposite end of the drop line (for example, an ONT (204)) or not (in turn connected to an ONTP (203)), regardless of whether it is on or off. This detection will be based on the mechanism explained below:
An ONU or ONT (and in general, any optical network user terminal equipment) designed for PON networks (with point-multipoint architecture), has an optical transceiver inside, which allows it to receive (downstream direction) the optical signal in a given wavelength coming from the OLT (located at the operator headend station), and in turn allows it to transmit the optical signal in a different wavelength for the upstream direction, through a single optical fiber. An example of said electro-optical element or transceiver (known from the state of the art) of an ONT is shown in figure 3. This element, by allowing the use of the same optical fiber to allow communication in both directions (in different lengths of waves) is also known as Bidirectional Optical Sub-Assembly or BOSA.

Said optical transceiver converts, by means of a photodetector (301), the optical signal coming from the OLT into an electrical signal and, on the other hand, by means of an optical transmitter (for example, a laser diode (302)) converts the electrical signal generated by the ONT, into an optical signal that is sent to the OLT.

In the case of an FTTH network in which the current GPON (Gigabit-capable Passive Optical Network) technology is used, the wavelength used for the downstream direction (OLT→ONT) is that of 1490 nm, and the wavelength used for the upstream direction (ONT→OLT) is 1310 nm (this is just a non-limiting example and other wavelengths can be used for the upstream and downstream directions).

Both optical signals are transmitted through a single optical fiber (303) so lenses (304) are necessary to direct and confine the light beams, and some coupling/multiplexer element that allows the optical signals of the upstream and downstream directions to be combined, from the laser diode to the optical fiber (upstream) and from the optical fiber to the photodetector (downstream). Thus, for example, there will be a light beam splitter (305) that will allow the existence of these two optical paths: from the laser diode to the optical fiber (306), and from the optical fiber to the photodetector (307).

These transceivers produce a high reflection (2) when, from the optical fiber, they receive an incident optical signal (1) with a wavelength close to that of the laser diode emission, that is, the one used in the upstream direction (1310 nm in example above). Additionally, this reflection (2) is strongly affected by the type of polarization of the light beam of this incident signal (1). Reflections are also produced in the different passive elements of a fiber optic access network, such as connectors, splitters, splice fusions, fiber optics, etc. however, these reflections are practically insensitive to changes in the polarization of the incident light beam.

Therefore, in the electro-optical element or transceiver of the ONT (BOSA) there is a high reflection sensitive to the polarization of the light beam at wavelengths close to the one emitted by its transmitter. However, the rest of the passive network behaves practically insensitive to these changes in polarization. Taking advantage of this circumstance, from the fiber optic terminal box, with a detector device that directly accesses the fiber optic drop line (last section of the optical network) it could be detected if there is an active piece of equipment with an electro-optical element (transceiver) in its interior. This last section of the network between OTB and ONTP (and from there to the ONT if there is one) can only be formed by an optical drop line (a direct cable) from the OTB to the customer's premises (as shown in the figure 2), general case in outdoor installations or with several sections of cables in indoor installations. In indoor installations, there may be a section with a riser type cable (the building's vertical one, or structured vertical one) between the OTB and junction boxes (CD) and a final section of drop line from the CD to the ONTP inside the customers' premises (CDs are usually placed in registers on the landings of different floors of buildings).

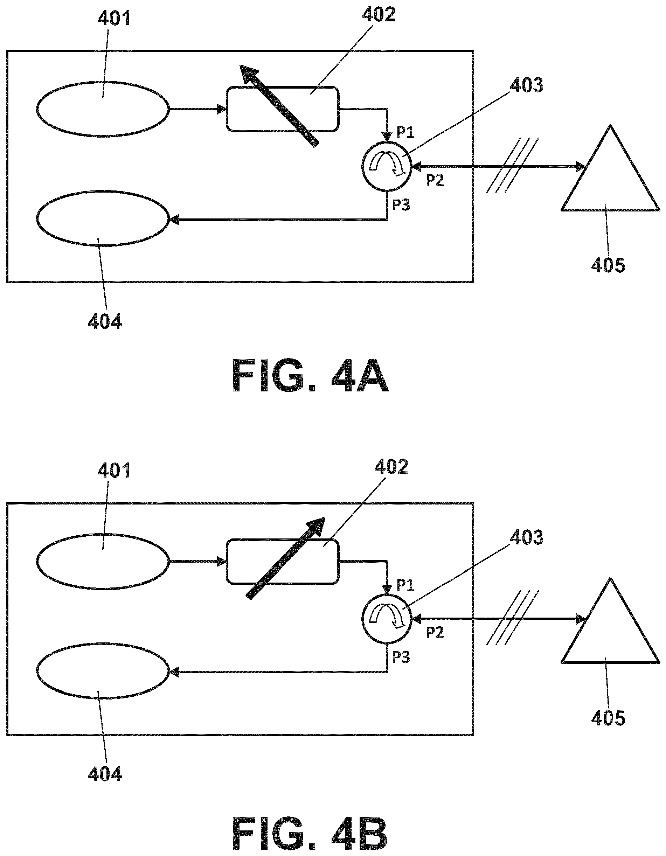

Figures 4a and 4b show schematically with blocks, the elements comprised in the detector device according to an embodiment of the invention (this is only an embodiment as an example and in other embodiments, as will be shown later, the arrangement of the elements may be different). Thus, in this embodiment, the device for detecting user fiber optic network terminal equipment (ONTs) would be composed of:
- Optical source (401). Laser or LED optical source (or any other type). Preferably, said optical source shall emit a signal at a wavelength close to the emission of the laser diode of the ONT transceiver (BOSA).
   Optionally, in case the optical source has excessive power that could damage the optical components that integrate the ONT, signal attenuators could be additionally used at the output of the optical source.
- Polarization Controller (402). This element allows the polarization of the light beam coming from the optical source to be varied. In the embodiment shown in figures 4a and 4b, said polarization controller will be at the output of the optical source, although other locations are possible.
- Optical circulator (403). Optical element with three input/output ports that routes the optical signal from one input port to the adjacent output port in a single direction. That is, the signal is transmitted from port 1 (P1) to port 2 (P2), from port 2 (P2) to port 3 (P3), and from port 3 (P3) to port 1 (P1). The optical circulator shall be insensitive to polarization. In the embodiment shown in figures 4a and 4b, said circulator directs the signal received by port 1 (P1) from the optical source (after passing through the polarization controller), towards port 2 (P2), connected with the fiber optic drop line from the user's premises (to the ONT, if any), and the reflected signal from the ONT, (which enters the circulator through port 2 (P2)), to the optical detector connected to the port 3 (P3) thereof.
   Optionally, instead of using an optical circulator, an optical coupler could be used. This optical coupler would have a common port and two input/output ports. One of the input/output ports transmits a percentage of the signal power to or from the common port, and the other input/output port transmits another percentage to or from the common port. In a possible embodiment, the coupler shall direct the signal received from the optical source (after passing said signal through the controller) delivering it to the fiber optic drop line associated with the premises of a given customer (to the ONT if there is one) and shall direct the reflected signal from the ONT to the optical detector.
- Optical detector (404), also called optical meter. It measures, at the wavelength of the optical source, the optical power of the signal received through the fiber optic drop line (reflected by the optical transceiver incorporated in the ONT (405) if an ONT is connected). The optical detector shall be insensitive to polarization; since if it were sensitive to polarization, the power measured by it could vary when changing polarization, without this being motivated by the existence of an ONT at the customer's premises, thus distorting the ideal operation of the device (which will be explained later).

The operation of the device is based on varying the polarization of the light beam from the optical source (401) and measuring the power of the reflected signal (by the electro-optical element of the ONT, if any). A circulator (403) is used to route the optical signal coming from the source to the customer's premises and the reflected signal (in the electro-optical element of the ONT if there is one) to the detector (404). In this embodiment, port 1 is connected to the optical source (after passing through the polarization controller), port 2 is connected to the fiber optic drop line that goes to the premises of the customer under analysis, and port 3 is connected to the optical detector.

As explained above, the power of the signal reflected by an optical element of an ONT is strongly affected by the type of polarization of the incident signal light beam. Therefore, if the optical signal transmitted by the drop line reaches an ONT, the signal reflected by it will vary considerably depending on the type of polarization of the optical signal incident on the ONT. Thus, with this device it is possible to detect the existence of an optically connected ONT at the customer's premises if a significant variation, above a certain threshold, of the power of the reflected optical signal is observed in the optical meter when the polarization of the signal from the optical source is changed. If the power of the reflected optical signal does not change with changes in polarization (or does so below the threshold), it could be determined that there is no ONT connected.

The threshold value in a preferred embodiment would be around 3dB (although, of course, other values can be used for this threshold).

That is, an optical signal with a given polarization (first polarization) is emitted (figure 4a) and a reflected signal with an optical power A is measured in the optical detector (404). The polarization is changed (to a second polarization, figure 4b) and in the optical meter (404) a reflected signal with an optical power B is measured.

In one embodiment, this would be done as follows: Initially, the system emits an optical signal with a given initial polarization (a priori, this can be uncontrolled). Starting from that initial polarization, and modifying the polarization of the signal by means of the polarization controller, up to a given polarization (polarization A) a situation will be reached in which the optical detector (404) shall measure a reflected signal with a maximum value, power A. This situation is shown in Figure 4a. By changing the polarization, up to a given polarization (polarization B), a situation shall be reached in which the optical detector 404 shall measure a reflected signal with a minimum value, power B. This situation is shown in figure 4B. That is, a sweep would be made so that the maximum and minimum value of the power of the reflected signal can be detected.

Then if, in absolute value, Received Power B - Received Power A >= Threshold→ It is determined that there is an ONT connected and if, in absolute value, Received Power B - Received Power A < Threshold → It is determined that there is no ONT connected (since there is no significant change in the power of the reflected signal when changing the polarization).

In one embodiment, the device indicates to the operator (via a user interface) the optical power received in each case (with each polarization). In another embodiment, the device itself can have a processor that performs this calculation and communicates to the operator (through a user interface that can consist of text, lights, sound...) if it has been determined that there is an ONT being optically connected or not. The device can also send a message (via a telecommunication network, for example a mobile telephone network) with the power information and/or the determination made.

The change of the polarization of the light can be ordered by the operator (through a user interface or any command that allows him/her to operate the polarization controller). Also in one embodiment, the device may have an automatic mode in which the device automatically changes polarization. Or in other words, the device automatically sets a polarization and measures the power of the reflected signal, and then after a time interval, changes the polarization and measures the power of the reflected signal.

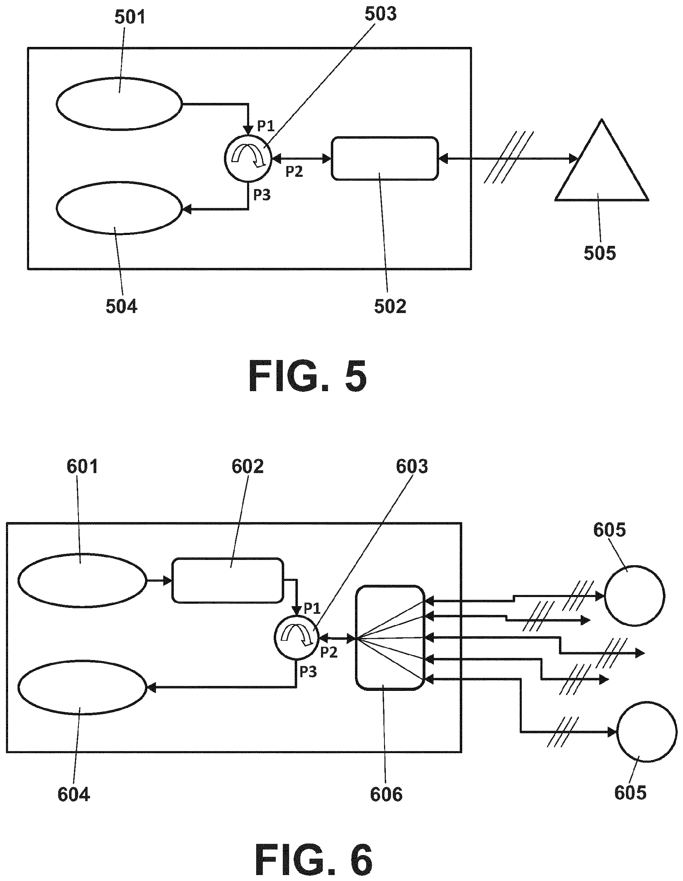

In other embodiments, the elements of the device may be differently located. Thus, in an alternative embodiment (shown in figure 5), the location of the polarization controller (502) is changed, placing it behind port 2 of the circulator (503) instead of just at the output of the optical source (501) (in general, it can be said that the key is that the controller be located in such a way that it can modify the polarization of the signal incident on the possible ONT). In this way, the device will behave in the same way and will detect if there is an ONT (505) optically connected or not, based on the optical power measurements made by the optical meter (504).

In other embodiments, an optical coupler may be used instead of a circulator. For example, in the configurations shown in figures 4a, 4b and 5, the device would have the same structure only that where the circulator is located, a coupler would be placed whose common port would be the one that delivers/receives the signal to/from the ONT (i.e. the common port would correspond to port 2 (P2) of the circulator). As stated above, the coupler has one common port and two output/input ports, with each port transmitting a percentage of the common port's signal. This coupler can be balanced (each port transmits 50% of the common port's signal) or unbalanced (each port transmits a different percentage of the common port's signal). In order to protect the optics of the ONT and that it does not receive a high power signal that could damage it, it is preferable to use an unbalanced coupler, for example, 90/10 or 95/5 (or any other value), so that the signal incident on the ONT is attenuated, affecting the signal reflected by the ONT as little as possible.

For example, in a 90/10 coupler consisting of an optical element with a common port, a port that transmits or receives 10% of the common port signal, and a port that transmits or receives 90%. Connecting the output of the light source (or the polarization controller) to the port with the lowest percentage (in this case 10%) would protect the ONT from possible damage due to high power; the port with the highest percentage (in this case 90%) is connected to the detector/meter to minimize the attenuation of the reflected signal and the common port is the one that would be connected to the optical drop line towards the customer's premises. Thus, in this example, the optical signal transmitted by the optical source would travel 10% towards the fiber optic drop line (common port) and therefore towards the ONT (if there is one). The rest of the power is lost. The signal reflected by the ONT re-enters the system through the common port of the coupler, directing 90% of the signal to the optical detector.

In one embodiment, a (1xN) switch can be used to connect the device to several (N) drop lines. For example, to all the drop lines of a given OTB. Figure 6 schematically shows a device with this switch.

The device would still consist of an optical source (601), a polarization controller (602), a coupler (603), and an optical detector (604). In the example of figure 6, the switch (606) would be connected to port 2 of the circulator and in turn the switch would be connected to N fiber optic drop lines (in other embodiments of the device, such as the one shown in figure 5, the switch would be connected between the polarization controller and the optical drop lines or between the circulator and the polarization controller).

The operation would be analogous to that explained for the case of a single drop line except that the device, automatically or manually, would switch between the different ports (drop lines) of the switch and, for each of them, it would vary the polarization to determine the existence or not of ONT (605) (in the same way as explained before for the case of a single drop line). With this switch, the operator would avoid having to pass the device from drop line to drop line of each OTB, with the consequent saving of time and labor.

In this text, the word "comprise" and its variants (such as "comprising", etc.) should not be interpreted in an exclusive way, that is, they do not exclude the possibility that what is described includes other elements, steps, etc. Also, in the claims, the expression "that comprises/comprising" does not exclude other elements or steps, and the indefinite article "a" or "an" does not exclude a plurality. No reference symbols in the claims should be construed as limiting the scope.

The specific design of each element and component shown in the figures is only for illustration and example; in no case there is an intention to limit the design of each component only to that shown in said figures.

The aspects defined in this detailed description are provided to aid in a thorough understanding of the invention. Accordingly, those skilled in the art will recognize that variations, changes, and modifications may be made to the embodiments described herein without departing from the scope of the invention. Also, the description of well-known functions and elements are omitted for the sake of clarity and conciseness.

Once the nature of the invention has been sufficiently described, as well as the way in which it is carried out in practice, it is necessary to state the possibility that its different parts may be manufactured in a variety of materials, sizes and shapes, and those variations that may be advised by practice, as long as they do not alter the fundamental principle of the present invention.

## Claims

1. Method for detecting the presence of a user optical network terminal equipment optically connected to a fiber optic drop line of a fiber optic distribution network, wherein the method comprises the following steps:
a) Transmitting by an optical device (201) connected to the fiber optic drop line, a first optical signal having a given wavelength with a first polarization, through the fiber optic drop line;
b) Measuring by the optical device (201), the optical power of the reflected first optical signal received through the fiber optic drop line;
c) Transmitting by the optical device (201), through the fiber optic drop line, a second optical signal having the given wavelength with a second polarization different from the first polarization;
d) Measuring by the optical device (201), the optical power of the reflected second optical signal received through the fiber optic drop line;
e) Comparing the difference between the optical power measured in step b) and step d) with a threshold value and determining the presence of the user optical network terminal equipment based on the result of said comparison.

2. Method according to claim 1, wherein step e) comprises: if said difference is greater than the threshold value, determining that there is a user optical network terminal equipment optically connected to the fiber optic drop line and otherwise, determining that there is no user optical network terminal equipment optically connected to the fiber optic drop line.

3. Method according to any of the preceding claims, wherein the method comprises a step prior to a), which consists of:
- disconnecting the fiber optic drop line from an optical terminal box, OTB, (202) and connecting the fiber optic drop line to the device (201).

4. Method according to any of the preceding claims, wherein the first polarization is the polarization at which the measured power of the reflected signal is maximum and the second polarization is the polarization at which the received signal of the reflected signal is minimum and/or
wherein, prior to step a) an optical signal with a given initial polarization is transmitted and, starting from that initial polarization, the polarization of the transmitted signal is modified until reaching the polarization at which the reflected signal has a maximum power, first polarization, and the polarization of the transmitted signal is modified until reaching the polarization at which the reflected signal has a minimum power, second polarization.

5. Method according to any of the preceding claims, wherein the fiber optic distribution network is a passive optical network, PON.

6. Method according to any of the preceding claims, wherein the wavelength of the optical signal emitted in steps a) and c) is close to the wavelength of emission of the transceiver of an ONT in a passive optical network.

7. Method according to any of the preceding claims, wherein the device (201) is connected to a switch (606) connected in turn to a group of several fiber optic drop lines, and wherein the switch (606) consecutively connects the device with each one of the fiber optic drop lines in the group and steps a)-e) are performed for each of the fiber optic drop lines in the group.

8. Device (201) for detecting user optical network terminal equipments in a fiber optic distribution network, wherein the device (201) comprises:
- An optical source (401, 501, 601) emitting an optical signal at a certain wavelength;
- A polarization controller (402, 502, 602) of the optical signal;
- An optical circulator (403, 503, 603) comprising three optical ports and configured to transmit all the optical signal received by the first port (P1) to the second port (P2) of the circulator and to transmit all the optical signal received by the second port (P2) to the third port (P3); or an optical coupler (403, 503, 603) configured to transmit a first percentage of the power of a signal received by a first input/output port to a common port and to transmit a second percentage of the signal received by the common port to a third input/output port.
- An optical meter (404, 504, 604) connected to the third port of the circulator or optical coupler (403, 503, 603);
wherein the output of the device (201) is connected to a fiber optic drop line and wherein the device (201) comprises a processor configured to cause the following actions to be carried out:
- Establishing a first polarization by the polarization controller (402, 502, 602) and transmitting a first optical signal at the given wavelength, emitted by the optical source (401, 501, 601), with the first polarization through the fiber optic drop line;
- Measuring in the optical meter (404, 504, 604) the optical power of the reflected first optical signal, received through the fiber optic drop line and the optical coupler or circulator (403, 503, 603);
- Establishing a second polarization by the polarization controller (402, 502, 602) and transmitting a second optical signal at the given wavelength, emitted by the optical source (410, 501, 601), with the second polarization through the fiber optic drop line;
- Measuring in the optical meter (404, 504, 604) the optical power of the reflected second optical signal, received through the fiber optic drop line and the optical coupler or circulator (403, 503, 603);
wherein the processor is further configured to: compare the difference between the measured optical powers of the first and second reflected optical signals, with a threshold value; determine the presence of a user optical network terminal equipment optically connected to the fiber optic drop line, based on the result of said comparison; and communicate the result of the determination by means of a message through a communication network and/or show the result through a user interface of the device (201).

9. Device according to claim 8, wherein the fiber optic distribution network is a passive optical network, PON and wherein the user optical network terminal equipments are ONTs.

10. Device according to any of the preceding claims 8-9, wherein the polarization controller is located at the output of the optical source, connected to the first port of the optical coupler or circulator or wherein the polarization controller is located at the output of the common port of the coupler or at the output of the second port of the optical circulator, connected to the fiber optic drop line.

11. Device according to any of the preceding claims 8-10, wherein the device (201) is connected to a group of several fiber optic drop lines by means of a switch.

12. System for detecting the presence of a user optical network terminal equipment, optically connected to a fiber optic drop line of a fiber optic distribution network, wherein the system comprises a device according to any of claims 8-11, at least one fiber optic drop line and at least one optical terminal box, OTB.

13. Computer program comprising computer executable instructions for implementing the method according to any of claims 1-7, when executed on a computer, a microprocessor, a microcontroller or any other form of programmable hardware.

## Patentansprüche

1. Verfahren zum Detektieren des Vorhandenseins eines Optisches-Benutzernetzwerk-Endgeräts, das optisch mit einer Glasfaserverbindungsleitung eines Glasfaserverteilungsnetzwerks verbunden ist, wobei das Verfahren die folgenden Schritte aufweist:
a) Senden, mittels einer optischen Vorrichtung (201), die mit der Glasfaserverbindungsleitung verbunden ist, eines ersten optischen Signals mit einer gegebenen Wellenlänge mit einer ersten Polarisation durch die Glasfaserverbindungsleitung;
b) Messen, mittels der optischen Vorrichtung (201), der optischen Leistung des reflektierten ersten optischen Signals, das durch die Glasfaserverbindungsleitung empfangen wird;
c) Senden, mittels der optischen Vorrichtung (201), durch die Glasfaserverbindungsleitung, eines zweiten optischen Signals mit der gegebenen Wellenlänge mit einer zweiten Polarisation, die sich von der ersten Polarisation unterscheidet;
d) Messen, mittels der optischen Vorrichtung (201), der optischen Leistung des reflektierten zweiten optischen Signals, das durch die Glasfaserverbindungsleitung empfangen wird;
e) Vergleichen der Differenz zwischen der optischen Leistung, die in Schritt b) und Schritt d) gemessen wird, mit einem Schwellenwert und Bestimmen des Vorhandenseins des Optisches-Benutzernetzwerk-Endgeräts auf der Basis des Ergebnisses dieses Vergleichs.

2. Verfahren gemäß Anspruch 1, wobei Schritt e) Folgendes aufweist: falls die genannte Differenz größer als der Schwellenwert ist, Bestimmen, dass es ein Optisches-Benutzernetzwerk-Endgerät gibt, das optisch mit der Glasfaserverbindungsleitung verbunden ist, und ansonsten Bestimmen, dass es kein Optisches-Benutzernetzwerk-Endgerät gibt, das optisch mit der Glasfaserverbindungsleitung verbunden ist.

3. Verfahren gemäß einem der vorhergehenden Ansprüche, wobei das Verfahren einen Schritt vor a) aufweist, der aus Folgendem besteht:
- Trennen der Glasfaserverbindungsleitung von einer Optisches-Endgerät-Box, OTB, (202) und Verbinden der Glasfaserverbindungsleitung mit der Vorrichtung (201).

4. Verfahren gemäß einem der vorhergehenden Ansprüche, bei dem die erste Polarisation die Polarisation ist, bei der die gemessene Leistung des reflektierten Signals maximal ist, und die zweite Polarisation die Polarisation ist, bei der das empfangene Signal des reflektieren Signals minimal ist, und/oder
wobei vor Schritt a) ein optisches Signal mit einer gegebenen anfänglichen Polarisation gesendet wird und ausgehend von dieser anfänglichen Polarisation die Polarisation des gesendeten Signals modifiziert wird, bis die Polarisation, bei der das reflektierte Signal eine maximale Leistung aufweist, erste Polarisation, erreicht ist, und die Polarisation des gesendeten Signals modifiziert wird, bis die Polarisation, bei der das reflektierte Signal eine minimale Leistung aufweist, zweite Polarisation, erreicht ist.

5. Verfahren gemäß einem der vorhergehenden Ansprüche, wobei das Glasfaserverteilungsnetzwerk ein passives optisches Netzwerk, PON, ist.

6. Verfahren gemäß einem der vorhergehenden Ansprüche, wobei die Wellenlänge des optischen Signals, das in Schritt a) und c) ausgesendet wird, nahe der Aussendungswellenlänge des Transceivers eines ONT in einem passiven optischen Netzwerk ist.

7. Verfahren gemäß einem der vorhergehenden Ansprüche, wobei die Vorrichtung (201) mit einem Switch (606) verbunden ist, der wiederum mit einer Gruppe von mehreren Glasfaserverbindungsleitungen verbunden ist, und wobei der Switch (606) die Vorrichtung nacheinander mit jeder der Glasfaserverbindungsleitungen in der Gruppe verbindet und die Schritte a) bis e) für jede der Glasfaserverbindungsleitungen in der Gruppe durchgeführt werden.

8. Vorrichtung (201) zum Detektieren von Optisches-Benutzernetzwerk-Endgeräten in einem Glasfaserverteilungsnetzwerk, wobei die Vorrichtung (201) folgende Merkmale aufweist:
- eine optische Quelle (401, 501, 601), die ein optisches Signal bei einer bestimmten Wellenlänge aussendet;
- eine Polarisationssteuerung (402, 502, 602) des optischen Signals;
- einen optischen Zirkulator (403, 503, 603), der drei optische Anschlüsse aufweist und dazu konfiguriert ist, alle optischen Signale, die von dem ersten Anschluss (P1) empfangen werden, an den zweiten Anschluss (P2) des Zirkulators zu senden und alle optischen Signale, die von dem zweiten Anschluss (P2) empfangen werden, an den dritten Anschluss (P3) zu senden; oder einen optischen Koppler (403, 503, 603), der dazu konfiguriert ist, einen ersten Prozentsatz der Leistung eines Signals, das durch einen ersten Eingang/Ausgang-Anschluss empfangen wird, an einen gemeinsamen Anschluss zu senden und einen zweiten Prozentsatz des Signals, das durch den gemeinsamen Anschluss empfangen wird, an einen dritten Eingang/Ausgang-Anschluss zu senden.
- ein optisches Messinstrument (404, 504, 604), das mit dem dritten Anschluss des Zirkulators oder optischen Kopplers (403, 503, 603) verbunden ist;
wobei der Ausgang der Vorrichtung (201) mit einer Glasfaserverbindungsleitung verbunden ist und wobei die Vorrichtung (201) einen Prozessor aufweist, der dazu konfiguriert ist, zu bewirken, dass die folgenden Maßnahmen ausgeführt werden:
- Herstellen einer ersten Polarisation durch die Polarisationssteuerung (402, 502, 602) und Senden eines ersten optischen Signals bei der gegebenen Wellenlänge, das durch die optische Quelle (401, 501, 601) ausgesendet wird, mit der ersten Polarisation durch die Glasfaserverbindungsleitung;
- Messen, in dem optischen Messinstrument (404, 504, 604), der optischen Leistung des reflektierten ersten optischen Signals, das durch die Glasfaserverbindungsleitung und den optischen Koppler oder Zirkulator (403,503,0603) empfangen wird;
- Herstellen einer zweiten Polarisation durch die Polarisationssteuerung (402, 502, 602) und Senden eines zweiten optischen Signals bei der gegebenen Wellenlänge, das durch die optische Quelle (410, 501, 601) ausgesendet wird, mit der zweiten Polarisation durch die Glasfaserverbindungsleitung;
- Messen, in dem optischen Messinstrument (404, 504, 604), der optischen Leistung des reflektierten zweiten optischen Signals, das durch die Glasfaserverbindungsleitung und den optischen Koppler oder Zirkulator (403, 503, 603) empfangen wird;
wobei der Prozess ferner dazu konfiguriert ist, die Differenz zwischen den gemessenen optischen Leistungen des ersten und zweiten reflektierten optischen Signals mit einem Schwellenwert zu vergleichen, das Vorhandensein eines Optisches-Benutzernetzwerk-Endgeräts, das optisch mit der Glasfaserverbindungsleitung verbunden ist, auf der Basis des Ergebnisses dieses Vergleichs zu bestimmen und das Ergebnis der Bestimmung mittels einer Nachricht über ein Kommunikationsnetzwerk zu kommunizieren und/oder das Ergebnis über eine Benutzerschnittstelle der Vorrichtung (201) anzuzeigen.

9. Vorrichtung gemäß Anspruch 8, wobei das Glasfaserverteilungsnetzwerk ein passives optisches Netzwerk, PON, ist und wobei die Optisches-Benutzernetzwerk-Endgeräte ONTs sind.

10. Vorrichtung gemäß einem der vorhergehenden Ansprüche 8 bis 9, wobei sich die Polarisationssteuerung am Ausgang der optischen Quelle befindet, die mit dem ersten Anschluss des optischen Kopplers oder Zirkulators verbunden ist, oder wobei sich die Polarisationssteuerung am Ausgang des gemeinsamen Anschlusses des Kopplers oder am Ausgang des zweiten Anschlusses des optischen Zirkulators, der mit der Glasfaserverbindungsleitung verbunden ist, befindet.

11. Vorrichtung gemäß einem der vorhergehenden Ansprüche 8 bis 10, wobei die Vorrichtung (201) mittels eines Switch mit einer Gruppe von mehreren Glasfaserverbindungsleitungen verbunden ist.

12. System zum Detektieren des Vorhandenseins eines Optisches-Benutzernetzwerk-Endgeräts, das optisch mit einer Glasfaserverbindungsleitung eines Glasfaserverteilungsnetzwerks verbunden ist, wobei das System eine Vorrichtung gemäß einem der Ansprüche 8 bis 11, zumindest eine Glasfaserverbindungsleitung und zumindest eine Optisches-Endgerät-Box, OTB, aufweist.

13. Computerprogramm, das computerausführbare Anweisungen zum Implementieren des Verfahrens gemäß einem der Ansprüche 1 bis 7 aufweist, wenn dasselbe auf einem Computer, einem Mikroprozessor, einem Mikrocontroller oder jeder anderen Form von programmierbarer Hardware ausgeführt wird.

## Revendications

1. Procédé pour détecter la présence d'un équipement terminal de réseau optique d'utilisateur qui est connecté optiquement à une ligne de branchement d'abonné à fibres optiques d'un réseau de distribution à fibres optiques, dans lequel le procédé comprend les étapes suivantes :
a) la transmission, par un dispositif optique (201) qui est connecté à la ligne de branchement d'abonné à fibres optiques, d'un premier signal optique qui présente une longueur d'onde donnée avec une première polarisation par l'intermédiaire de la ligne de branchement d'abonné à fibres optiques ;
b) la mesure, par le dispositif optique (201), de la puissance optique du premier signal optique réfléchi qui est reçu par l'intermédiaire de la ligne de branchement d'abonné à fibres optiques ;
c) la transmission, par le dispositif optique (201), par l'intermédiaire de la ligne de branchement d'abonné à fibres optiques, d'un second signal optique qui présente la longueur d'onde donnée avec une seconde polarisation qui est différente de la première polarisation ;
d) la mesure, par le dispositif optique (201), de la puissance optique du second signal optique réfléchi qui est reçu par l'intermédiaire de la ligne de branchement d'abonné à fibres optiques ; et
e) la comparaison de la différence entre les puissances optiques qui sont mesurées au niveau de l'étape b) et de l'étape d) avec une valeur de seuil et la détermination de la présence de l'équipement terminal de réseau optique d'utilisateur sur la base du résultat de ladite comparaison.

2. Procédé selon la revendication 1, dans lequel l'étape e) comprend : si ladite différence est supérieure à la valeur de seuil, la détermination du fait qu'il y a un équipement terminal de réseau optique d'utilisateur qui est connecté optiquement à la ligne de branchement d'abonné à fibres optiques et sinon, la détermination du fait qu'il n'y a pas d'équipement terminal de réseau optique d'utilisateur qui est connecté optiquement à la ligne de branchement d'abonné à fibres optiques.

3. Procédé selon l'une quelconque des revendications précédentes, dans lequel le procédé comprend une étape, avant l'étape a), qui est constituée par :
- la déconnexion de la ligne de branchement d'abonné à fibres optiques vis-à-vis d'une boîte à bornes optique, OTB, (202) et la connexion de la ligne de branchement d'abonné à fibres optiques sur le dispositif (201).

4. Procédé selon l'une quelconque des revendications précédentes, dans lequel :
la première polarisation est la polarisation à laquelle la puissance mesurée du signal réfléchi est maximum et la seconde polarisation est la polarisation à laquelle le signal reçu du signal réfléchi est minimum ; et/ou dans lequel :
avant l'étape a), un signal optique qui présente une polarisation initiale donnée est transmis et, en partant de cette polarisation initiale, la polarisation du signal transmis est modifiée jusqu'à ce qu'elle atteigne la polarisation à laquelle le signal réfléchi présente une puissance maximum, la première polarisation, et la polarisation du signal transmis est modifiée jusqu'à ce qu'elle atteigne la polarisation à laquelle le signal réfléchi présente une puissance minimum, la seconde polarisation.

5. Procédé selon l'une quelconque des revendications précédentes, dans lequel le réseau de distribution à fibres optiques est un réseau optique passif, PON.

6. Procédé selon l'une quelconque des revendications précédentes, dans lequel la longueur d'onde du signal optique qui est émis/transmis au niveau des étapes a) et c) est proche de la longueur d'onde d'émission du combiné émetteur-récepteur d'un terminal d'un ONT, dans un réseau optique passif.

7. Procédé selon l'une quelconque des revendications précédentes, dans lequel le dispositif (201) est connecté à un commutateur (606) qui est connecté à son tour à un groupe de plusieurs lignes de branchement d'abonné à fibres optiques, et dans lequel le commutateur (606) connecte de façon consécutive le dispositif à chacune des lignes de branchement d'abonné à fibres optiques dans le groupe et les étapes a) à e) sont réalisées pour chacune des lignes de branchement d'abonné à fibres optiques dans le groupe.

8. Dispositif (201) pour détecter des équipements terminaux de réseau optique d'utilisateur dans un réseau de distribution à fibres optiques, dans lequel le dispositif (201) comprend :
- une source optique (401, 501, 601) qui émet un signal optique à une certaine longueur d'onde ;
- un contrôleur de polarisation (402, 502, 602) du signal optique ;
- un circulateur optique (403, 503, 603) qui comprend trois ports optiques et qui est configuré pour transmettre la totalité du signal optique qui est reçu par le premier port (P1) au deuxième port (P2) du circulateur optique et pour transmettre la totalité du signal optique qui est reçu par le deuxième port (P2) au troisième port (P3) ; ou un coupleur optique (403, 503, 603) qui est configuré pour transmettre un premier pourcentage de la puissance d'un signal qui est reçu par un premier port d'entrée/de sortie à un port commun et pour transmettre un second pourcentage du signal qui est reçu par le port commun à un troisième port d'entrée/de sortie ; et
- un moyen de mesure optique (404, 504, 604) qui est connecté au troisième port du circulateur optique ou du coupleur optique (403, 503, 603) ;
- dans lequel la sortie du dispositif (201) est connectée à une ligne de branchement d'abonné à fibres optiques et dans lequel le dispositif (201) comprend un processeur qui est configuré pour faire en sorte que les actions suivantes soient mises en œuvre :
- l'établissement d'une première polarisation par le contrôleur de polarisation (402, 502, 602) et la transmission d'un premier signal optique à la longueur d'onde donnée, lequel premier signal optique est émis par la source optique (401, 501, 601), avec la première polarisation par l'intermédiaire de la ligne de branchement d'abonné à fibres optiques ;
- la mesure, dans le moyen de mesure optique (404, 504, 604), de la puissance optique du premier signal optique réfléchi, lequel premier signal optique réfléchi est reçu par l'intermédiaire de la ligne de branchement d'abonné à fibres optiques et du coupleur optique ou du circulateur optique (403, 503, 603) ;
- l'établissement d'une seconde polarisation par le contrôleur de polarisation (402, 502, 602) et la transmission d'un second signal optique à la longueur d'onde donnée, lequel second signal optique est émis par la source optique (410, 501, 601), avec la seconde polarisation par l'intermédiaire de la ligne de branchement d'abonné à fibres optiques ; et
- la mesure, dans le moyen de mesure optique (404, 504, 604), de la puissance optique du second signal optique réfléchi, lequel second signal optique réfléchi est reçu par l'intermédiaire de la ligne de branchement d'abonné à fibres optiques et du coupleur optique ou du circulateur optique (403, 503, 603) ;
- dans lequel le processeur est en outre configuré pour : comparer la différence entre les puissances optiques mesurées des premier et second signaux optiques réfléchis avec une valeur de seuil ; déterminer la présence d'un équipement terminal de réseau optique d'utilisateur qui est connecté optiquement à la ligne de branchement d'abonné à fibres optiques, sur la base du résultat de ladite comparaison ; et communiquer le résultat de la détermination au moyen d'un message par l'intermédiaire d'un réseau de communication et/ou présenter le résultat par l'intermédiaire d'une interface utilisateur du dispositif (201).

9. Dispositif selon la revendication 8, dans lequel le réseau de distribution à fibres optiques est un réseau optique passif, PON, et dans lequel les équipements terminaux de réseau optique d'utilisateur sont des ONT.

10. Dispositif selon l'une quelconque des revendications précédentes 8 et 9, dans lequel le contrôleur de polarisation est localisé au niveau de la sortie de la source optique, en connexion sur le premier port du coupleur optique ou du circulateur optique, ou dans lequel le contrôleur de polarisation est localisé au niveau de la sortie du port commun du coupleur optique ou au niveau de la sortie du deuxième port du circulateur optique, en connexion sur la ligne de branchement d'abonné à fibres optiques.

11. Dispositif selon l'une quelconque des revendications précédentes 8 à 10, dans lequel le dispositif (201) est connecté à un groupe de plusieurs lignes de branchement d'abonné à fibres optiques au moyen d'un commutateur.

12. Système pour détecter la présence d'un équipement terminal de réseau optique d'utilisateur qui est connecté optiquement à une ligne de branchement d'abonné à fibres optiques d'un réseau de distribution à fibres optiques, dans lequel le système comprend un dispositif selon l'une quelconque des revendications 8 à 11, au moins une ligne de branchement d'abonné à fibres optiques et au moins une boîte à bornes optique, OTB.

13. Programme informatique comprenant des instructions pouvant être exécutées par ordinateur pour mettre en œuvre le procédé selon l'une quelconque des revendications 1 à 7, lorsqu'elles sont exécutées sur un ordinateur, un microprocesseur, un microcontrôleur ou tout autre forme de matériel programmable.
